# EUROPÄISCHE PATENTANMELDUNG

(11) **EP 4 293 629 A1**
(43) Veröffentlichungstag der Anmeldung: **20.12.2023**
(21) Anmeldenummer: 23179247.4
(22) Anmeldetag: 14.06.2023
(51) Int. Cl.: G06V 10/14, F21V 8/00, G06V 40/13

(54) **VORRICHTUNG ZUR OPTISCHEN DIREKTAUFNAHME VON SICHERHEITSRELEVANTEN OBJEKTEN, WIE HAUTABDRÜCKEN**

(30) Priorität: 17.06.2022 DE 102022115194
(71) Anmelder: Dermalog Jenetric GmbH, 07749 Jena (DE)
(72) Erfinder: HILLMANN, Jürgen, 07745 Jena (DE); MORGENEIER, Dirk, 07749 Jena (DE)
(74) Vertreter: Gleim Petri Patent- und Rechtsanwaltspartnerschaft mbB

(57) **Zusammenfassung**

Die Erfindung betrifft eine Vorrichtung zur optischen Direktaufnahme von sicherheitsrelevanten Objekten (101) mit einer Schichtenfolge, enthaltend eine Deckschicht (401) mit einer Auflagefläche (102) für ein sicherheitsrelevantes Objekt (101), eine Sensorschicht (406), eine Abstandsschicht (403) mit Abstandstrukturen (502), um von der Auflagefläche (102) einfallendes Licht auf kleine Einfallswinkel auf der Sensorschicht (406) zu begrenzen, und ein Substrat (407) als Träger der Schichtenfolge. Um sicherheitsrelevante Objekte (101) mit gutem Kontrast über eine große Auflagefläche (102) aufnehmen zu können, weisen die Sensorpixel (307) jeweils ein lichtempfindliches Element (303) und einen Durchlassbereich (304) auf und die Abstandsschicht (403) ist durch zusätzlich auf die Sensorschicht (406) aufgebrachte Abstandsstrukturen (502) oder durch aus vorhandenen, erhaben ausgeformten Funktionselementen gebildeten Abstandsstrukturen (502) erzeugt und weist im Bereich der Eintrittsapertur (308) jedes lichtempfindlichen Elements (303) Aussparungen (301) auf, die jeweils mit einem Medium ausgefüllt sind, das einen gegenüber der Sensorschicht (406) und einer in Richtung der Auflagefläche (102) angrenzende Schicht einen wesentlich niedrigeren Brechungsindex aufweist.

## Beschreibung

Die Erfindung betrifft eine Vorrichtung zur optischen Direktaufnahme von sicherheitsrelevanten Objekten, wie mindestens Hautabdrücken, insbesondere zur Aufnahme von Papillarlinien von Finger- oder Handabdrücken zur Personenidentifikation, Hautpartien für medizinische Zwecke, Textilien und Lebensmitteln, zur Positionserkennung von Fingern auf Displays (z.B. für Mobilgeräte), sowie optional zur Aufnahme von Dokumenten (beispielsweise Pässen, Führerscheinen und beliebigen anderen Ausweisen, wie Eintrittskarten, Bordkarten etc.).

Es gibt verschiedene Konzepte, um Hautabdrücke für Identifikationszwecke aufzunehmen. Die optische Aufnahme von Fingerabdrücken ist zu diesem Zweck weit verbreitet.

Je nach Ausführungsform des verwendeten Sensors bzw. dessen Beleuchtung, können Bilder erzeugt werden, bei denen entweder die Hauttäler hell erscheinen (FTIR-Prinzip) oder die Hautberge hell (Nicht-FTIR-Prinzip) erscheinen. Maßgeblich für die Bildentstehung ist das Winkelspektrum der verwendeten Beleuchtung sowie die Dicke und Brechzahl der optischen Schichten, die sich zwischen dem Sensor und der Auflagefläche für den Hautbereich befinden.

Der Aufbau eines Fingerabdrucksensors mit einer Schichtenfolge, auf dessen Oberfläche ein Finger aufgelegt wird, ist in der US 6,128,399 A beschrieben. Der dort offenbarte Fingerabdrucksensor besteht aus einem Substrat mit Beleuchtungselementen und einer Deckschicht mit einer Auflagefläche und einer zweidimensionalen Matrix von photosensitiven Elementen. Von den Beleuchtungselementen emittiertes Licht gelangt durch transparente Lücken zwischen den intransparenten photosensitiven Elementen zu einem abzubildenden Objekt oder Körperteil. Die photosensitiven Elemente können nur Licht detektieren, das nicht direkt von der Beleuchtungsschicht emittiert wird, sondern aus Richtung der Auflagefläche zu den photosensitiven Elementen gelangt.

Die Beleuchtungselemente können jedoch auch zwischen den photosensitiven Elementen angeordnet sein, wie beispielsweise in der DE 10 2018 122 872 A1 offenbart.

Problematisch bei solchen Schichtanordnungen ist, dass bei Scannern, die auf optischer TFT-Technologie basieren, der maximale Abstand zwischen Auflagefläche und photosensitiven Elementen bzw. einer Beleuchtungsschicht auf den halben Pixelabstand (Pixelpitch) begrenzt ist. Werden alle Arten von Lichtkegeln, die von Objekten remittiert werden, jeweils vollständig von den lichtempfindlichen Elementen detektiert (ohne zusätzliche Maßnahmen), führt dies zu einem geringen Kontrast zwischen Hautbergen und Hauttälern, was gemäß der DE 10 2018 122 872 A1 durch stark limitierte, außermittig über jedem Sensorelement angeordnete Blendenöffnungen unterbunden werden kann.

Es gibt verschiede Ansätze, den maximalen Abstand zwischen Sensorebene und Auflagefläche zu erhöhen. Dabei kann entweder das Licht aus den Bergen oder aus den Tälern oder die direkte Rückreflexion der Beleuchtung an der Auflagefläche zur Bildgebung verwendet werden.

Eine Bildgebung durch direkte Rückreflexion der Beleuchtung an der Auflagefläche ist in der EP 3 008 662 B1 beschrieben. Darin wird von den Beleuchtungselementen kommendes Licht an einem Übergang von Auflagefläche zu Luft, also in einem Hauttal, aufgrund des großen Unterschieds der Brechungsindizes teilweise reflektiert und an einem Übergang von Auflagefläche zu Haut bzw. Hautberg aufgrund der Ähnlichkeit der Brechungsindizes größtenteils transmittiert. Transmittiertes Licht wird überwiegend vom Finger absorbiert. Bei der Bildgebung durch direkte Rückreflexion erscheinen daher die Hauttäler hell und die Hautberge dunkel. Da jedoch der Anteil des direkt reflektierten Anregungslichts sehr gering (ca. 4 %) ist, wird zur Kontrasterhöhung zwischen Hautberg und Hauttal eine Beschränkung des Einfallswinkels vorgeschlagen, indem entweder vor jedem Sensorelement eine Mikrolinse vorhanden ist, oder die Beleuchtung nur streifenweise in jeder zweiten Reihe aktiv ist und in der passiven Reihe die Sensoren aktiv sind, wobei die Aktivierung der Beleuchtungs- und Sensorpixel wechselweise umgeschaltet wird.

Des Weiteren können, um den Kontrast der Abbildung zu erhöhen, ein oder mehrere jedem photosensitiven Element bzw. Sensorpixel zugeordnete Aperturblenden vorhanden sein, um die Einfallswinkel des von der Auflagefläche remittierten Lichts zu beschränken, wie beispielsweise in WO 2017/045130 A1, WO 2017/063119 A1 und US 2017/0017824 A1 beschrieben.

Eine weitere Art der Winkeleinschränkung unter der Verwendung divergierender Elemente ist in der US 10 108 841 B2 offenbart. Dafür werden divergierende Elemente und Aperturen oberhalb der Beleuchtungsschicht so angeordnet, dass das von der Auflagefläche kommende Licht nur bis zu einem begrenzten, kleinen Einfallswinkel zu den Photodioden gelangt.

Die Verwendung eines eingeschränkten Beleuchtungsspektrums zur Kontraststeigerung ist in der DE 10 2018 122 917 A1 beschrieben.

Ein sandwichartiges Fingerabdruckerkennungsgerät, das in der US 2017/0169274 A1 offenbart ist, umfasst in der Schichtenfolge eine erste transparente Schicht (1-800 µm) als Deckschicht mit einer Auflagefläche zum Auflegen eines Fingers, eine optische Filterschicht mit einer Vielzahl von Durchgangslöchern, eine zweite transparente Schicht und einen optischen Sensor bzw. eine Sensorschicht. An der unteren Seite der Deckschicht ist die Filterschicht angeformt und der optische Sensor ist mit der Filterschicht derart fest verbunden, dass die Filterschicht zwischen der ersten transparenten Schicht und dem optischen Sensor angeordnet ist. Die Filterschicht wird dabei als ein Raumfilter genutzt, das einfallendes Licht moduliert, um in dem vom Fingerabdruck reflektierten Licht schräg einfallende Anteile zu unterdrücken, abzutrennen oder zu reflektieren. Die Filterschicht kann eine Sperrschicht mit einer Vielzahl von Durchgangslöchern, die nur sehr kleine Einfallswinkel zum Sensor durchlassen, oder eine Reflexionsschicht beinhalten, die große Einfallswinkel reflektiert und somit schräg einfallendes Licht schwächt und das Rauschen mindert. Die Winkelbegrenzung kann aber auch mit einer Vielzahl hohler Säulen mit opakem Füllmaterial zwischen den Säulen erreicht werden, wobei nur durch die hohlen Zylinder (mit 2-100 µm Durchmesser) unter kleinen Winkeln einfallendes Licht zum Sensor gelangen kann. Dadurch wird zwar der Winkelbereich des Lichts, das von der Auflagefläche aus die Sensorschicht erreichen kann, stark eingeschränkt und infolge der Rauschunterdrückung der Kontrast der Abbildung eines Fingerabdrucks verbessert, aber die Erzeugung der Durchganglöcher in Sperrschicht oder Säulenschicht gestaltet sich aufwändig.

Die Aufgabe der Erfindung ist es daher, eine neue Möglichkeit zur optischen Direktaufnahme von sicherheitsrelevanten Objekten, wie mindestens Hautabdrücken, mit einer Schichtenfolge zu finden, die eine Aufnahme von sicherheitsrelevanten Objekten mit einem über eine große Auflagefläche gleichmäßig guten Kontrast gestattet, ohne dabei die Helligkeit oder die Brillanz der Abbildung wahrnehmbar zu verschlechtern.

Erfindungsgemäß wird die Aufgabe bei einer Vorrichtung zur optischen Direktaufnahme von sicherheitsrelevanten Objekten, wie mindestens Hautabdrücken, mit einer Schichtenfolge, enthaltend eine Deckschicht mit einer Auflagefläche für ein sicherheitsrelevantes Objekt, eine Sensorschicht, die in einem zweidimensionalen Raster angeordnete Sensorpixel aufweist, wobei die lichtempfindlichen Elemente nur für aus Richtung der Auflagefläche kommendes Licht empfindlich sind, eine Abstandsschicht mit Abstandstrukturen, um von der Auflagefläche einfallendes Licht auf kleine Einfallswinkel auf der Sensorschicht zu begrenzen, und ein Substrat als Träger der Schichtenfolge, dadurch gelöst, dass die Sensorpixel jeweils ein lichtempfindliches Element und einen transparenten Durchlassbereich aufweisen, die Abstandsschicht durch zusätzlich auf die Sensorschicht aufgebrachte Abstandsstrukturen oder durch aus vorhandenen, erhaben ausgeformten Funktionselementen der Sensorschicht gebildeten Abstandsstrukturen erzeugt ist, jedem Sensorpixel eine Abstandsstruktur zugeordnet ist und eine Beleuchtungsschicht zum Aussenden von Beleuchtungslicht, die - aus Richtung der Auflagefläche gesehen - unterhalb einer Ebene der Eintrittsaperturen der lichtempfindlichen Elemente der Sensorschicht angeordnet ist.

Sicherheitsrelevante Objekte sind Hautbereiche, wie beispielsweise der Abdruck eines Fingers, Hand- oder Fußabdrücke, sowie Dokumente zur Identifizierung von Personen, wie zum Beispiel ein Personalausweis, ein Reisepass, ein Führerschein, eine Kredit- oder eine Visitenkarte.

Durch die Abstandsschicht mit den Abstandstrukturen wird von der Auflagefläche einfallendes Licht auf kleine Einfallswinkel auf der Sensorschicht begrenzt, um den Kontrast einer Aufnahme eines sicherheitsrelevanten Objekts zu erhöhen. Das Licht, das ein sicherheitsrelevantes Objekt nach dem Einfall des Beleuchtungslichts remittiert, wird als Streulicht bezeichnet. Beleuchtungslicht, das direkt an der Auflagefläche der Deckschicht reflektiert wird, wird als direkte Rückreflexion bezeichnet. Licht, das durch das sicherheitsrelevante Objekt hindurch oder an dem sicherheitsrelevanten Objekt vorbei auf die Auflagefläche fällt, wird als Umgebungslicht bezeichnet. Umgebungslicht und Streulicht, das unter einem großen Winkel auf die Deckfläche fällt, sollen erfindungsgemäß nicht oder nur zu einem möglichst geringen Anteil aus Richtung der Auflagefläche auf die Sensorschicht einfallen.

Die direkte Rückreflexion und das Streulicht, das aus Hauttälern remittiert wird, haben erfindungsgemäß einen überwiegenden Anteil an einer Bildgebung bei der Aufnahme der sicherheitsrelevanten Objekte. Der Einfallswinkel des Beleuchtungslichts auf die Auflagefläche, unter dem direkte Rückreflexion stattfinden kann, ist analog zu einem Grenzwinkel der Totalreflektion begrenzt, der von einem Brechzahlunterschied abhängt. Das Streulicht, das aus Hauttälern remittiert wird, hat einen größeren Anteil an der Bildgebung, da das Hauttal einen Luftspalt ausbildet, dessen Brechzahlunterschied zur Deckschicht größer ist als der Brechzahlunterschied von einem Hautberg zur Deckschicht. Daher wird Streulicht, das aus Hauttälern remittiert wird, an der Auflagefläche stärker zu einem Lot der Auflagefläche hin gebrochen.

Umso größer der Abstand zwischen dem sicherheitsrelevanten Objekt und der Sensorschicht ist, desto größer ist der Anteil der direkten Rückreflexion an der Bildgebung bei der Aufnahme. Das liegt daran, dass das remittierte Licht aus den Hauttälern im Wesentlichen statistisch gleichverteilt in alle Richtungen remittiert wird, wohingegen umso mehr Beleuchtungslicht direkt zurückreflektiert wird, je kleiner der Einfallswinkel des Beleuchtungslichts auf die Auflagefläche ist.

Oberhalb der Sensorschicht befinden sich Aussparungen, die vorteilhaft jeweils genau einem lichtempfindlichen Element zugeordnet sind. Diese können auf verschiedene Weisen eingebracht sein und sind mit einem Gas oder einem Gasgemisch gefüllt oder evakuiert. Sie können oberhalb der lichtempfindlichen Elemente als Teil der Sensorschicht mit Hilfe von Blendenstrukturen, als Teil einer unebenen Sensoroberfläche oder einer unebenen Unterseite der Deckschicht oder als Teil der Abstandsschicht in diese eingebracht sein. Schließlich können die Aussparungen der Abstandsschicht mit einem Material gefüllt sein, das einen niedrigeren Brechungsindex als eine in Richtung der Auflagefläche über der Abstandsschicht angeordnete Schicht aufweist.

Wichtig für die Erfindung ist, dass alles Licht, das von der Auflagefläche kommend die lichtempfindlichen Elemente erreicht, vorher auf eine solche Aussparung trifft. Dadurch wird Licht mit Einfallswinkeln, die größer sind als der Grenzwinkel der Totalreflexion an der Grenzfläche einer Schicht, die sich über der Abstandsschicht befindet und einen höheren Brechungsindex als das Medium in der Aussparung der Abstandsschicht aufweist, an der Grenzfläche totalreflektiert und somit für die Sensoraufnahme geblockt.

Vorteilhaft ist die Beleuchtungsschicht - aus Richtung der Auflagefläche gesehen - unterhalb der Sensorschicht angeordnet und weist zwischen der Beleuchtungsschicht und der Sensorschicht eine Luftschicht auf. Dadurch kann das Winkelspektrum des Beleuchtungslichts auf kleinere Winkelbereiche eingeschränkt werden. Die Luftschicht zwischen Beleuchtungsschicht und Sensorschicht dient also der Erhöhung des Beleuchtungsabstands, um durch eine gerichtete Beleuchtung mit im Wesentlichen senkrechtem Strahlprofil geringer Divergenz die Bildgebung positiv zu beeinflussen.

Die Beleuchtungsschicht kann Beleuchtungselemente aufweisen, die zwischen den lichtempfindlichen Elementen in die Sensorschicht integriert sein können. Dadurch kann eine Vorrichtung zur optischen Direktaufnahme von sicherheitsrelevanten Objekten kompakter gestaltet werden.

Die Abstandsschicht kann durch Ausnutzung vorhandener, erhaben ausgeformter Funktionselemente der Sensorschicht erzeugt sein, indem erhaben geformte Funktionselemente, wie zum Beispiel (nichttransparente) Diodenblenden, welche die Eintrittsapertur jedes lichtempfindlichen Elementes definieren und dessen aktive Fläche beschränken, die Abstandsstrukturen bilden. Solche vorhandenen, erhaben ausgeformten Funktionselemente können auch elektronische Strukturen sein, die lichtempfindliche Elemente auf deren nichttransparenten Bereichen zu deren Auslesung aufweisen. Alternativ kann die Abstandsschicht durch zusätzlich auf die Sensorschicht aufgebrachte, transparente Abstandsstrukturen erzeugt sein. Dabei kann sich zwischen den transparenten Strukturen (mindestens im Bereich über jedem lichtempfindlichen Element) ein Gas, ein Gasgemisch (z.B. Luft) oder ein Vakuum befinden oder ein transparentes festes Medium mit niedrigem Brechungsindex (n ≤ 1,4) vollflächig auf der Sensorschicht aufgebracht sein.

Die Diodenblenden können beispielsweise durch eine Abdeckung, welche in Richtung der Auflagefläche über das lichtempfindliche Element hinausragt, oder durch eine stufenförmige Abdeckung realisiert werden. Eine weitere Diodenblendenschicht kann zusätzlich direkt unterhalb der Sensorschicht angeordnet sein, um das von der Beleuchtungsschicht kommende Beleuchtungslicht zu blocken und einen Winkelbereich des Beleuchtungslichts einzuschränken. Die Diodenblenden sind aus einem nicht transparenten Material ausgeführt. Für die Diodenblenden kann beispielsweise ein Metall wie z.B. Molybdän, Kupfer, Silber oder Gold oder eine Legierung verwendet werden. Es ist vorteilhaft, wenn jede Diodenblende das lichtempfindliche Element auf dem sie angeordnet ist gegenüber einem seitlichen Lichteinfall abdeckt.

Als Eintrittsapertur wird ein Bereich verstanden, durch den Licht in einen Sensorpixel einfallen kann. Die Eintrittsaperturen können beispielsweise durchlässige Bereiche der Diodenblenden sein.

Besonders vorteilhaft sind die Diodenblenden so ausgelegt, dass sie einen Bereich jedes lichtempfindlichen Elements abdecken. Der nicht von der Diodenblende abgedeckte Bereich jedes lichtempfindlichen Elements ist bevorzugt zwischen zu 20 µm² und 150 µm² groß und jede Diodenblende ist umlaufend um den nicht von der Diodenblende abgedeckten Bereich geformt. Jede Diodenblende hat vorzugsweise eine Höhe von mehr als 2 µm, mindestens jedoch 600 nm, um als Abstandsstruktur dienen zu können.

Zweckmäßig ist die Abstandsschicht in Aussparungen zwischen den Abstandsstrukturen mit einem Gas oder einem Gasgemisch gefüllt. Die Aussparungen können aber auch evakuiert sein. Bevorzugt sind die Aussparungen der Abstandsschicht mit einem Gasgemisch gefüllt, das zweckmäßig Luft ist. Die Abstandsschicht kann ebenso vorteilhaft mit mindestens einem Gas, wie Stickstoff, Argon, Helium oder anderen inerten Gasen, gefüllt sein. Die Aussparungen können ebenso mit Magnesium- oder Kalziumfluorid oder niedrigbrechenden Optical Clear Adhesives (OCAs), wie z.B. NOA1315 oder NOA133, gefüllt sein.

Zwischen der Auflagefläche und der Sensorschicht kann eine zusätzliche Filterschicht vorhanden sein, um Umgebungslicht, das durch das sicherheitsrelevante Objekt und/oder an dem sicherheitsrelevanten Objekt vorbei zur Auflagefläche gelangt, auszufiltern. Durch das Filtern kann das Umgebungslicht nicht auf die Sensorschicht einfallen. Die Filterschicht weist vorzugsweise ein Spektralfilter, besonders bevorzugt ein Tiefpass- oder Bandpassfilter, auf.

Die Verbindung der Deckschicht mit dem Sensor, gebildet wenigstens aus Substrat und Sensorschicht, kann durch Vakuumbonden erzeugt sein. Die Verbindung der Deckschicht mit dem Sensor kann ebenso mit einem Kleberahmen durch sogenanntes Airgapbonden erzeugt sein. Dabei verbleibt Luft (oder ein anderes Gas oder Gasgemisch) zwischen der Deckschicht und dem Sensor. Alternativ kann die Verbindung der Deckschicht mit dem Sensor durch eine Adhäsionsschicht mit sehr niedrigem Brechungsindex (≤ 1,4) erzeugt sein.

Durch das Vakuumbonden werden Sensor und Deckschicht dauerhaft miteinander verbunden und der Sensor wird gleichzeitig vor Umwelteinflüssen, wie Feuchtigkeit, geschützt. Dazu wird die Deckschicht auf den Sensor aufgelegt, die Schicht zwischen der Deckschicht und dem Sensor evakuiert und die Deckschicht bevorzugt nur am Rand in einem Bereich, der keine lichtempfindlichen Elemente aufweist, mittels des Umgebungsdrucks gegenüber dem Unterdruck in der Schicht zwischen der Deckschicht und dem Sensor fixiert. Mittels eines Kleberahmens um die Außenkanten von Deckschicht und Sensor wird die so fixierte Deckschicht am Rand hermetisch abgedichtet.

Besonders vorteilhaft an durch Vakuumbonden verbundenen Schichten ist, dass sie wieder entfernt und erneut aufgebracht werden können. Bevorzugt ist ein Kleberahmen oder eine Adhäsionsschicht mittels Hitze lösbar. Infolge der Benutzung zerkratzte Auflageflächen bzw. Deckschichten können so ausgetauscht werden. Dies ist aus Kosten- und Ressourcengründen vorteilhaft. Außerdem ist die Deckschicht durch einen vorhandenen Unterdruck zwischen Sensorschicht und Deckschicht zusätzlich fixiert.

Alternativ kann die Deckschicht auf dem Sensor mittels der Adhäsionsschicht fixiert werden. Der Kleberahmen oder die Adhäsionsschicht können dabei aus OCA oder aus Flüssigkleber bestehen und sich zwischen dem Sensor und der Deckschicht befinden. Vorteilhaft beträgt eine Dicke des Kleberahmens oder der Adhäsionsschicht 3 bis 50 µm.

Die Erfindung soll nachfolgend durch Ausführungsbeispiele anhand von Zeichnungen näher beschrieben werden. Hierzu zeigen:
- Fig. 1a: eine Schnittdarstellung einer ersten Ausführung der erfindungsgemäßen Vorrichtung zur optischen Direktaufnahme von sicherheitsrelevanten Objekten mit einem Finger als sicherheitsrelevantes Objekt,
- Fig. 1b: eine vergrößerte Schnittdarstellung der ersten Ausführung der erfindungsgemäßen Vorrichtung von Fig. 1a mit dem Finger als sicherheitsrelevantes Objekt sowie beispielhaft einige Strahlenverläufe,
- Fig. 2a: eine Schnittdarstellung einer zweiten Ausführung der Vorrichtung zur optischen Direktaufnahme von sicherheitsrelevanten Objekten,
- Fig. 2b: eine Schnittdarstellung einer dritten Ausführung der Vorrichtung zur optischen Direktaufnahme von sicherheitsrelevanten Objekten,
- Fig. 2c: eine Draufsicht auf die dritte Ausführung der Vorrichtung gemäß Fig. 2b,
- Fig. 2d: eine Schnittdarstellung einer vierten Ausführung der Vorrichtung zur optischen Direktaufnahme von sicherheitsrelevanten Objekten,
- Fig. 2e: eine Schnittdarstellung einer fünften Ausführung der Vorrichtung zur optischen Direktaufnahme von sicherheitsrelevanten Objekten,
- Fig. 3: eine Schnittdarstellung einer vorteilhaften Ausführung einer Schichtenfolge einer Vorrichtung zur optischen Direktaufnahme von sicherheitsrelevanten Objekten,
- Fig. 4: eine Schnittdarstellung einer sechsten Ausführung der Vorrichtung zur optischen Direktaufnahme von sicherheitsrelevanten Objekten,
- Fig. 5a: eine Schnittdarstellung einer Seitenansicht einer siebten Ausführung der Vorrichtung zur optischen Direktaufnahme von sicherheitsrelevanten Objekten,
- Fig. 5b: eine Schnittdarstellung einer Seitenansicht einer vorteilhaften Ausführung eines Sensorpixels mit einer Diodenblende und
- Fig. 6a-f: Draufsichten auf verschiedene Ausführungsbeispiele der Anordnung von Sensorpixeln und Abstandsstrukturen durch Bildung einer Abstandsschicht mittels Funktionselementen der Sensorschicht und separater Abstandsschicht.

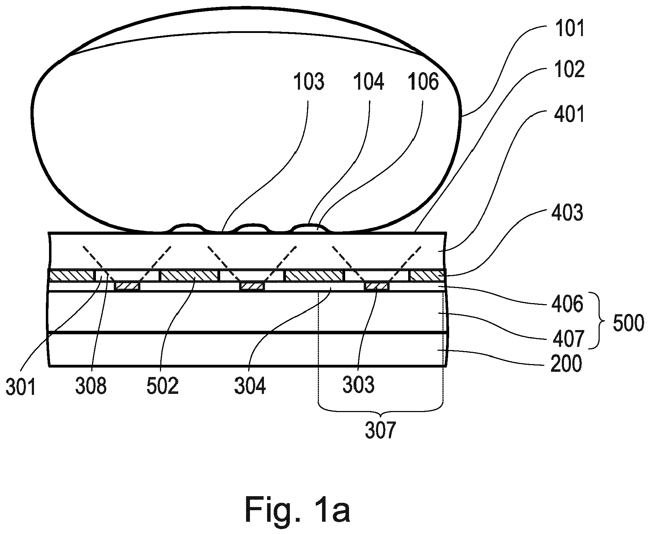

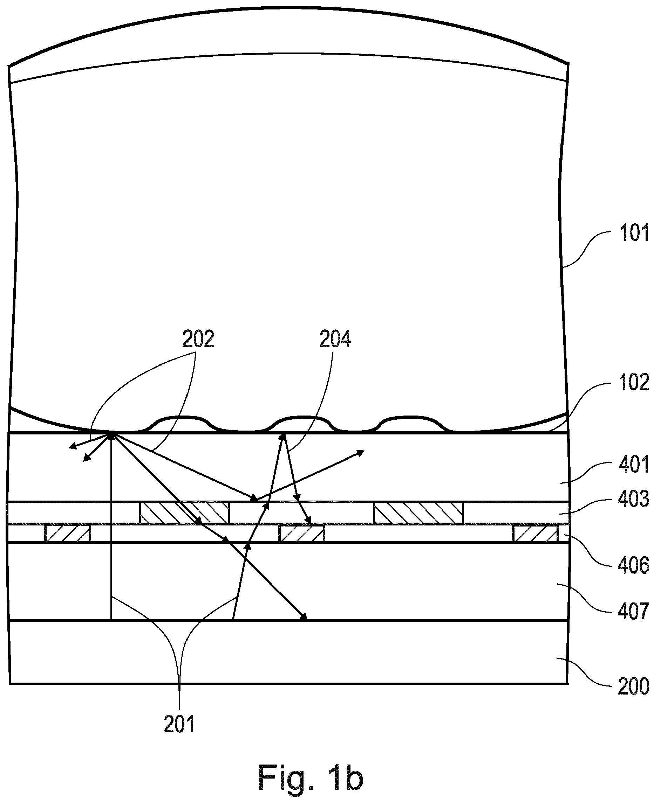

**Fig. 1a** zeigt eine erste Ausführung einer Vorrichtung zur optischen Direktaufnahme von sicherheitsrelevanten Objekten 101. Bei dem dargestellten sicherheitsrelevanten Objekt 101 handelt es sich um einen Finger, der auf einer Auflagefläche 102 aufgelegt ist. Die Auflagefläche 102 ist die Oberfläche einer Deckschicht 401. Die Vorrichtung enthält eine Sensorschicht 406, die aus Richtung der Auflagefläche 102 gesehen unterhalb der Deckschicht 401 angeordnet ist und in einem zweidimensionalen Raster angeordnete Sensorpixel 307 mit lichtempfindlichen Elementen 303 aufweist, wobei die lichtempfindlichen Elemente 303 nur für aus Richtung der Auflagefläche 102 kommendes Licht empfindlich sind. Die Sensorpixel 307 weisen jeweils ein lichtempfindliches Element 303 und einen transparenten Durchlassbereich 304 auf. Aus Richtung der Auflagefläche 102 gesehen, ist unterhalb der Sensorschicht 406 ein Substrat 407, das als Träger der Schichtenfolge aus der Sensorschicht 406, einer Abstandsschicht 403 und der Deckschicht 401 dient, angeordnet. Von der Beleuchtungsschicht 200 kann Beleuchtungslicht 201 in Richtung der Auflagefläche 102 emittiert werden. Die Vorrichtung enthält weiterhin die Abstandsschicht 403 mit Abstandsstrukturen 502, die bei der in Fig. 1a und Fig. 1b gezeigten Ausführung transparent sind, um von der Auflagefläche 102 einfallendes Licht auf kleine Einfallswinkel auf der Sensorschicht 406 zu begrenzen. Die Abstandsschicht 403 ist zwischen der Deckschicht 401 und der Sensorschicht 406 angeordnet und durch zusätzlich auf der Sensorschicht 406 aufgebrachte Abstandsstrukturen 502 oder durch aus vorhandenen, erhaben ausgeformten Funktionselementen der Sensorschicht 406 gebildeten Abstandsstrukturen 502 gebildet. Die Abstandsschicht 403 ist zwischen Sensorschicht 406 und Auflagefläche 102 angeordnet. Jedes Sensorpixel 307 ist einer Abstandsstruktur 502 der Abstandsschicht 403 zugeordnet.

Die Dicke der Abstandsschicht 403 in vertikaler Richtung, also senkrecht zu den Schichten des Schichtenstapels, beträgt bevorzugt mindestens 600 nm. Besonders bevorzugt beträgt die Dicke der Abstandsschicht 403 in vertikaler Richtung mindestens 600 nm und maximal 2.000 nm.

Sicherheitsrelevante Objekte 101 sind Hautbereiche, wie beispielsweise der Abdruck eines Fingers, Hand- oder Fußabdrücke, sowie Dokumente zur Identifizierung von Personen, wie zum Beispiel ein Personalausweis, ein Reisepass, ein Führerschein, eine Kredit- oder eine Visitenkarte. Bei der Auflage eines Dokuments verbleibt ein Luftspalt 106 zwischen Auflagefläche 102 und sicherheitsrelevantem Objekt 101. Der Kontrast bei der Aufnahme von dem Dokument entsteht dadurch, dass helle Bereiche des Dokuments das Beleuchtungslicht 201 besser reflektieren als dunkle Bereiche.

In Fig. 1a ist das sicherheitsrelevante Objekt 101 als ein Finger mit mehreren Hautbergen 103 und Hauttälern 104 dargestellt, der auf der Auflagefläche 102 aufgelegt ist. Die Auflagefläche 102 wird durch die Außenfläche einer widerstandsfähigen transparenten Deckschicht 401 gebildet, auf der auch mehrere Finger 101 gleichzeitig aufgelegt werden können. Die Deckschicht 401 kann beispielsweise aus Glas oder Keramik gebildet sein. Zur optischen Aufnahme des aufgelegten Fingers 101 ist in Fig. 1a die Struktur der Sensorschicht 406 schematisch anhand von drei Sensorpixeln 307 dargestellt. Der transparente Durchlassbereich 304 der Sensorpixel 307 nimmt vorteilhaft 10-80% einer gesamten Sensorpixelfläche, vorzugsweise 10-50% und besonders bevorzugt 20-40% der gesamten Sensorpixelfläche ein.

Das Substrat 407 bildet die Grundlage für den Aufbau der Schichtenfolge der Vorrichtung zur Aufnahme sicherheitsrelevanter Objekte 101. Mittels photolithographischer Prozesse, die im Stand der Technik als TFT-(thin-film transistor) Technologie bekannt sind, werden Leiter, Halbleiter und Isolatoren auf dem Substrat 407 aufgebracht. Alternativ ist die Herstellung einzelner Schichten auch mittels Druckverfahren möglich, zum Beispiel per Siebdruckverfahren. Das Substrat 407 besteht bevorzugt aus einem transparenten Material, wie Kunststoff oder Glas, um den Durchlass von Beleuchtungslicht 201 zu ermöglichen, das aus Richtung der Durchlassbereiche 304 der Sensorpixel 307 der Sensorschicht 406 kommend durch die gesamte Schichtenfolge und die Auflagefläche 102 hindurch das sicherheitsrelevante Objekt 101, zum Beispiel den Finger oder das Dokument, beleuchtet.

Jedes Sensorpixel 307 weist ein lichtempfindliches Element 303 zur Umwandlung von Licht in elektrische Signale und einen transparenten Durchlassbereich 304 auf. Bei den lichtempfindlichen Elementen 303 handelt es sich um Photodioden, die so beschaffen sind, dass sie von unten, also aus Richtung des Substrats 407, kein Licht detektieren können. Dies wird über eine undurchlässige Sensorpixelfläche 306, beispielsweise eine Blende aus einem nicht transparenten Material an der Unterseite der Photodiode realisiert, wie es im Stand der Technik bekannt und üblich ist. Die lichtempfindlichen Elemente 303 haben gewöhnlich einen Öffnungswinkel von ca. 180° und sind so beschaffen, dass sie Licht eines vorgegebenen Wellenlängenbereichs aus Richtung der Auflagefläche 102 erfassen. Bevorzugt detektieren die Sensorpixel 307 einen Wellenlängenbereich im sichtbaren Strahlungsspektrum zwischen 380 und 780 nm. Die Sensorschicht 406 weist zur Aufnahme von FBI-konformen Bildern bevorzugt einen Mittenabstand der lichtempfindlichen Elemente 303 von ≤ 50,8 µm auf, was einer Auflösung von 500 ppi (pixel per inch) oder mehr entspricht.

**Fig. 1b** zeigt dieselbe Ausführung der erfindungsgemäßen Vorrichtung zur optischen Direktaufnahme von sicherheitsrelevanten Objekten 101 wie Fig. 1a mit dem Finger als sicherheitsrelevantes Objekt 101 in einer vergrößerten Darstellung.

Ein möglicher Lichtweg von Beleuchtungslicht 201 ist in Fig. 1b beispielhaft von einem der Durchlassbereiche 304 zur Beleuchtung des Fingers an dessen Unterseite in Richtung der Auflagefläche 102 gerichtet und führt im aufgelegten sicherheitsrelevanten Objekt 101, hier im Finger, zu punktueller Umwandlung in Streulicht 202. In Richtung der Auflagefläche 102 gerichtetes Beleuchtungslicht 201 tritt in die Deckschicht 401 ein und wird aufgrund eines Brechzahlunterschieds gebrochen. Das von der Beleuchtungsschicht 200 emittierte Licht bzw. das Beleuchtungslicht 201 wird an der Deckschicht 401 reflektiert oder durch die Deckschicht 401 transmittiert, gelangt zum sicherheitsrelevanten Objekt 101 und wird als Streulicht 202 remittiert. Streulicht 202, das unter einem großen Winkel auf die Abstandsschicht 403 einfällt, gelangt jedoch aufgrund des Brechzahlunterschieds zwischen der Deckschicht 401 und der Abstandsschicht 403 nicht zu den lichtempfindlichen Elementen 303. Es wird an dem Übergang von der Deckschicht 401 zu der Abstandsschicht 403 im Bereich der Aussparungen 301 totalreflektiert. Es kann von einem lichtempfindlichen Element 303 nur dann empfangen werden, wenn der Einfallswinkel auf die Abstandsschicht 403 kleiner als der Totalreflexionswinkel ist.

Der Winkel der Totalreflexion hängt dabei von den Brechungsindizes der Abstandsschicht 403 und der Deckschicht 401 ab. Die Abstandsschicht 403 kann mit einem festen Medium niedrigen Brechungsindexes (n ≤ 1,4), einem Gas oder einem Gasgemisch gefüllt oder evakuiert sein. Die Deckschicht 401 muss zumindest teilweise transparent für das von der Beleuchtungsschicht 200 kommende Beleuchtungslicht 201 sein und besteht vorzugsweise aus Glas. Wenn die Deckschicht 401 aus Glas besteht und die Abstandsschicht 403 mit Luft gefüllt ist, beträgt der Grenzwinkel der Totalreflexion ca. 41°. Soll der Abstand zwischen Auflagefläche 102 und Sensorschicht 406 sehr groß sein, kann vorteilhaft statt Glas auch ein Material mit einem höheren Brechungsindex (z.B. n ≥ 1,7) verwendet werden, um den Grenzwinkel der Totalreflexion zu erhöhen.

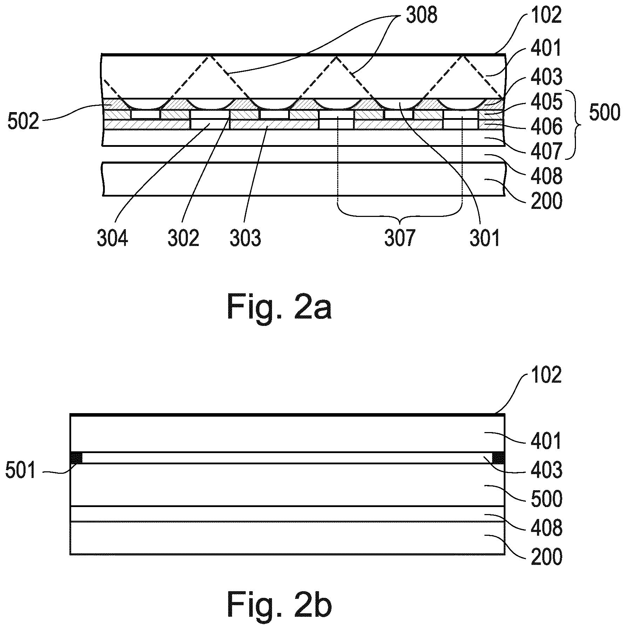

Das Beleuchtungslicht 201 wird teilweise an der Auflagefläche 102 reflektiert. Diese direkte Rückreflexion 204, auch als Fresnel-Reflexion bezeichnet, findet am Übergang der Deckschicht 401 zu einer Umgebung bzw. einem sicherheitsrelevanten Objekt 101 statt, da die Deckschicht 401 eine höhere optische Dichte bzw. Brechzahl als die Umgebung bzw. die Umgebungsluft oder als das sicherheitsrelevante Objekt 101 aufweist. Ob Fresnel-Reflexion auftritt, hängt neben den Brechzahlen der Deckschicht 401 und der Umgebung oder des sicherheitsrelevanten Objekts 101 auch vom Einfallswinkel des Beleuchtungslichts 201 auf die Auflagefläche 102 ab. Für senkrechten Lichteinfall beträgt der Anteil der direkten Rückreflexion vom Beleuchtungslicht 201 bei einem Glas-Luft-Übergang ca. 4%. Das heißt, dass ein großer Anteil des Beleuchtungslichts 201 durch die Auflagefläche 102 transmittiert wird und nur ein kleiner Anteil als direkte Rückreflexion 204 zurückreflektiert wird. Ein Grenzwinkel der direkten Rückreflexion 204 ist gleich dem Grenzwinkel der Totalreflexion, also zum Beispiel ca. 41° für den Übergang von Glas zu Luft. Wenn die direkte Rückreflexion 204 einen wesentlichen Beitrag zur Aufnahme von sicherheitsrelevanten Objekten 101 leisten soll, ist es daher sinnvoll, wenn zwischen Sensor 500 und Beleuchtungsschicht 200 eine Luftschicht 408 (u.a. dargestellt in Fig. 2a) vorhanden ist, um den Winkel, unter welchem das Beleuchtungslicht 201 auf die Auflagefläche 102 einfällt, zu beschränken.

Abstrahlwinkel von Displays oder Hintergrundbeleuchtungen, wie sie für die Beleuchtungsschicht 200 verwendet werden können, betragen bevorzugt zwischen 10° und 40°, besonders bevorzugt zwischen 15° und 20°.

Durch die Abstandsschicht 403 und die Diodenblenden 302 werden die direkte Rückreflexion 204 und das Streulicht 202, das aus Hauttälern 104 remittiert wird, gegenüber dem Streulicht 202, das von den Hautbergen 103 kommt, bevorzugt detektiert. Das liegt daran, dass die direkte Rückreflexion 204 einen Grenzwinkel, unter dem Beleuchtungslicht 201 direkt zurückreflektiert werden kann, aufweist und umso mehr Beleuchtungslicht 201 direkt zurückreflektiert wird, je kleiner der Einfallswinkel des Beleuchtungslichts 201 an der Auflagefläche 102 ist. Der Ausfallwinkel der direkten Rückreflexion 204 ist gleich dem Einfallswinkel des Beleuchtungslichts 201 auf die Auflagefläche 102. Da der Brechzahlunterschied zwischen Luftspalt 106 unter dem Hauttal 104 und Deckschicht 401 größer ist als der Brechzahlunterschied zwischen Hautberg 103 und Deckschicht 401, wird ein größerer Anteil des Beleuchtungslichts 201 an der Auflagefläche 102 so reflektiert, dass es auf das lichtempfindliche Element eines Pixels treffen kann.

Je größer der Abstand zwischen sicherheitsrelevantem Objekt 101 und Sensorschicht 406 wird, desto größer wird der Anteil der direkten Rückreflexion 204 an der Bildgebung bei der Aufnahme. Das liegt daran, dass das von der Haut remittierte Licht im Wesentlichen gleichmäßig in alle Richtungen remittiert wird, wohingegen umso mehr Beleuchtungslicht 201 direkt zurückreflektiert wird, je kleiner der Einfallswinkel des Beleuchtungslichts 201 auf die Auflagefläche 102 ist. Aufgrund der beschriebenen Effekte kann eine gerichtete Beleuchtung mit einem im Wesentlichen senkrechten Strahlprofil die Bildgebung positiv beeinflussen.

Die in **Fig. 2a** dargestellte zweite Ausführung der Vorrichtung zur optischen Direktaufnahme von sicherheitsrelevanten Objekten 101 umfasst eine Schichtenfolge, die die Deckschicht 401 mit der Auflagefläche 102, die Abstandsschicht 403 mit Abstandsstrukturen 502, eine Diodenblendenschicht 405 mit Diodenblenden 302, die Sensorschicht 406 mit den Sensorpixeln 307, und das Substrat 407 enthält. Die Sensorpixel 307 weisen jeweils ein lichtempfindliches Element 303 und einen transparenten Durchlassbereich 304 auf. Zwischen dem Substrat 407 und der Beleuchtungsschicht 200 ist auch bei der in Fig. 2a dargestellten Ausführung eine Luftschicht 408 angeordnet. Die Aussparung 301 ist bei dem dargestellten Ausführungsbeispiel über eine unebene Sensoroberfläche erzeugt. Die Fläche der Aussparung 301 bzw. die Ausdehnung der Aussparung 301 in horizontaler Richtung sollte mindestens so groß sein wie eine Abbildung der Diodenblende 302 in die Abstandsschicht 403 unter einem Winkel der Totalreflexion, der vorzugsweise 41° beträgt oder kleiner als 45° ist.

Oberhalb der Sensorschicht 406 befindet sich eine jedem lichtempfindlichen Element 303 zugeordnete Aussparung 301. Diese kann auf verschiedene Weisen eingebracht und mit einem Gas oder einem Gasgemisch gefüllt oder evakuiert sein. Die Aussparung 301 ist Teil der Abstandsschicht 403. Sie kann oberhalb der lichtempfindlichen Elemente 303 als Teil eines Sensors 500, der die Diodenblendenschicht 405, die Sensorschicht 406 und das Substrat 407 umfasst, mit Hilfe einer Diodenblende 302, als Teil einer unebenen Sensoroberfläche oder einer an der Unterseite unebenen Deckschicht 401 eingebracht sein. Die einzelnen Varianten werden in den folgenden Ausführungsbeispielen genauer beschrieben. Wichtig ist, dass bei einem Vorhandensein von Aussparungen 301 alles Licht, welches theoretisch von der Auflagefläche 102 die lichtempfindlichen Elemente 303 erreicht, auf eine Aussparung 301 trifft. Dadurch werden Winkel, die größer als der Grenzwinkel der Totalreflexion sind, am Übergang einer der Schichten zur Abstandsschicht 403 geblockt.

Die Diodenblendenschicht 405 ist zwischen der Abstandsschicht 403 und der Sensorschicht 406 angeordnet. Jedem lichtempfindlichen Element 303 ist eine Diodenblende 302 zugeordnet, die auf dem lichtempfindlichen Element 303 aufgebracht ist. Die Diodenblenden 302 weisen eine Ausdehnung in Richtung der Auflagefläche 102 auf und können in Kombination mit den Aussparungen 301 den Einfallswinkel des Beleuchtungslichts 201 aus Richtung der Auflagefläche 102 beschränken. Die Diodenblenden 302 dienen dazu, eine verbesserte Auflösung erzielen zu können, da durch sie Licht aus einem kleineren Bereich der Auflagefläche 102 ein lichtempfindliches Element 303 erreichen kann. Die Aussparungen 301 sind in dem dargestellten Ausführungsbeispiel tropfenförmig geformt und der Winkelbereich bzw. die Eintrittsapertur 308, in dem Streulicht 202 und die direkte Rückreflexion 204 zur Sensorschicht 406 gelangen, ist schematisch durch gestrichelte Linien dargestellt.

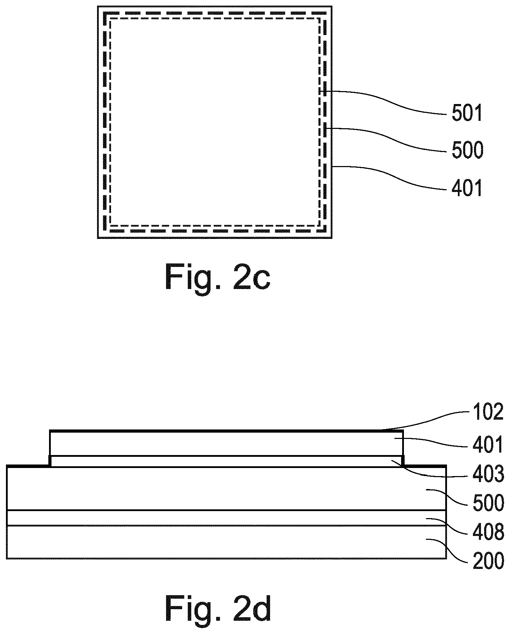

In **Fig. 2b** und **Fig. 2c** ist eine dritte Ausführung der Vorrichtung zur optischen Direktaufnahme von sicherheitsrelevanten Objekten 101 abgebildet. Die Vorrichtung umfasst die Deckschicht 401 mit der Auflagefläche 102, einen aus Sicht der Auflagefläche 102 unterhalb der Deckschicht 401 angeordneten Sensor 500, gebildet aus Sensorschicht 406 und Substrat 407, die Abstandsschicht 403, die Luftschicht 408 und die Beleuchtungsschicht 200. Die Verbindung der Deckschicht 401 mit dem Sensor 500 ist durch einen Kleberahmen 501 mittels Airgapbonden erzeugt. Der Kleberahmen 501 verklebt die Deckschicht 401 mit dem Sensor 500. Der Kleberahmen 501 soll nicht in den Bereich der Sensorschicht 406, in dem die Sensorpixel 307 angeordnet sind, ragen. Durch den Kleberahmen 501 ist die Deckschicht 401 fixiert und bewegt sich bei der Auflage eines sicherheitsrelevanten Objekts 101 nicht. Das Verwenden eines Kleberahmens 501 zur Fixierung der Deckschicht 401 wird auch als Airgapbonden bezeichnet, da ein Luftspalt in der Abstandsschicht 403 zwischen der Deckschicht 401 und dem Sensor 500 entsteht.

In **Fig. 2d** ist eine vierte Ausführung der Vorrichtung zur optischen Direktaufnahme von sicherheitsrelevanten Objekten 101 gezeigt. Die Deckschicht 401 ist bei der vierten Ausführung mittels Vakuumbonden auf den Sensor 500 aufgebracht. Durch das Vakuumbonden werden Sensor 500 und Deckschicht 401 dauerhaft miteinander verbunden und der Sensor 500 wird gleichzeitig vor Umwelteinflüssen, wie Feuchtigkeit, geschützt. Dabei ist eine erste Breite der Deckschicht 401 geringer als eine zweite Breite des Sensors 500. Die Abstandsschicht 403 ist seitlich abgedichtet, um einen Druck innerhalb der Abstandsschicht 403, der wesentlich geringer als der Umgebungsdruck ist, zu erhalten.

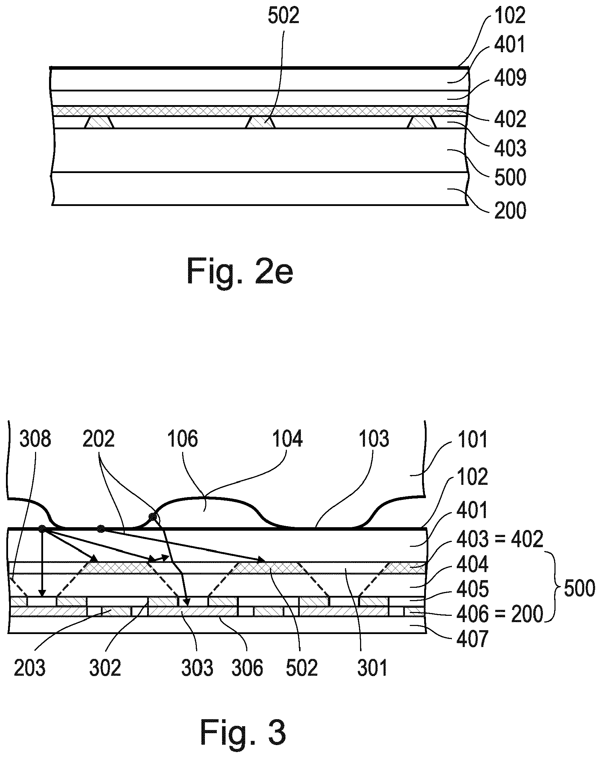

Eine fünfte Ausführung der Vorrichtung zur optischen Direktaufnahme von sicherheitsrelevanten Objekten 101 ist in **Fig. 2e** gezeigt. Die Vorrichtung umfasst die Deckschicht 401 mit der Auflagefläche 102, einen aus Sicht der Auflagefläche 102 unterhalb der Deckschicht 401 angeordneten Sensor 500, gebildet aus Sensorschicht 406 und Substrat 407, die Abstandsschicht 403 mit kegelstumpfförmigen Abstandsstrukturen 502 und die Beleuchtungsschicht 200. Die Verbindung der Deckschicht 401 mit dem Sensor 500 ist durch eine Adhäsionsschicht 402 erzeugt. Die Adhäsionsschicht 402 ist in bei der gezeigten Ausführung durchgängig ausgebildet und muss daher zumindest teilweise transparent für das Beleuchtungslicht 201 sein. Da keine Luftschicht 408 vorhanden ist, ist die Vorrichtung zur optischen Direktaufnahme von sicherheitsrelevanten Objekten 101 kompakter gestaltet.

Die fünfte Ausführung der Vorrichtung zur optischen Direktaufnahme von sicherheitsrelevanten Objekten 101 weist eine Filterschicht 409 auf, die vorzugsweise einen Spektralfilter enthält. Die Filterschicht 409 dient dazu Umgebungslicht, welches durch das sicherheitsrelevante Objekt 101 und/oder an dem sicherheitsrelevanten Objekt 101 vorbei zur Auflagefläche 102 gelangt, zu blocken.

In **Fig. 3** ist eine schematische Darstellung der Schichtenfolge der Vorrichtung zur optischen Direktaufnahme von sicherheitsrelevanten Objekten 101 in einer bevorzugten Ausführungsform gezeigt. Auf einem Substrat 407 ist eine Sensorschicht 406 mit nichttransparenten lichtempfindlichen Elementen 303 angeordnet. Jedem lichtempfindlichen Element 303 ist eine Diodenblende 302 zugeordnet. Die Schichtenfolge enthält die Deckschicht 401 mit der Auflagefläche 102, die Abstandsschicht 403 mit den Abstandsstrukturen 502, die Diodenblendenschicht 405 mit den Diodenblenden 302, die Sensorschicht 406 mit den Sensorpixeln 307, die Abstandsschicht 403 mit den Abstandsstrukturen 502 und das Substrat 407. Die Beleuchtungsschicht 200 weist Beleuchtungselemente 203 auf, die zwischen den lichtempfindlichen Elementen 303 in die Sensorschicht 406 integriert sind. Die Beleuchtungsschicht 200 und die Sensorschicht 406 sind somit in einer Schicht zusammengefasst. In der in Fig. 3 dargestellten Schichtenfolge ist zusätzlich eine Passivierungsschicht 404 vorhanden, die dazu dient die Sensorschicht 406 vor äußeren Einflüssen zu schützen. Die Passivierungsschicht 500 ist hier ein Bestandteil des Sensors 500. Die Passivierungsschicht 404 kann beispielsweise aus einem organischen Material (z.B. Polyamid) gebildet sein. Die Abstandsstrukturen 502 dienen gleichzeitig als Adhäsionsmittel, um die Deckschicht 401 mit dem Sensor 500 zu verbinden. Die Deckschicht 401 und die Adhäsionsschicht 402 sind somit ebenfalls in einer Schicht zusammengefasst. Durch das Zusammenfassen von Schichten kann die Vorrichtung zur optischen Direktaufnahme von sicherheitsrelevanten Objekten 101 noch kompakter gestaltet sein. Die Adhäsionsschicht 402 ist so ausgebildet, dass nur in solchen Bereichen, durch die kein Beleuchtungslicht 201 auf die lichtempfindlichen Elemente 303 der Sensorpixel 307 fällt, Adhäsionsmittel vorhanden sind. Die Adhäsionsmittel dienen gleichzeitig als Abstandsstrukturen 502.

In Fig. 3 sind zudem schematisch einige Strahlengänge des von der Auflagefläche 102 kommenden Lichts dargestellt. Im Gegensatz zu der in Fig. 1b gezeigten Ausführung sind die Abstandsstrukturen 502 hier nicht transparent.

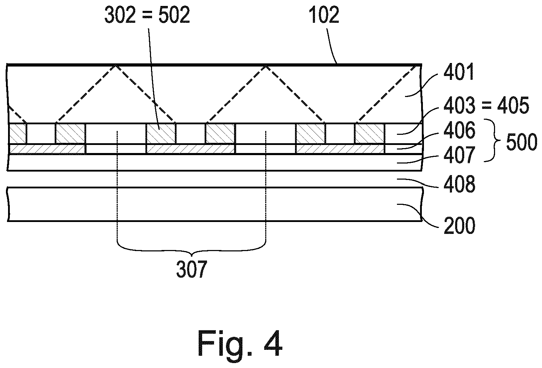

In **Fig. 4** ist eine sechste Ausführung der Vorrichtung zur optischen Direktaufnahme von sicherheitsrelevanten Objekten 101 dargestellt. Die Schichtenfolge enthält die Deckschicht 401 mit der Auflagefläche 102, die Abstandsschicht 403 mit Abstandsstrukturen 502, eine Diodenblendenschicht 405 mit Diodenblenden 302, die Sensorschicht 406 mit den Sensorpixeln 307, die Abstandsschicht 403 mit den Abstandsstrukturen 502 und das Substrat 407. Die Abstandsschicht 403 ist durch aus vorhandenen, erhaben ausgeformten Funktionselementen der Sensorschicht 406 gebildeten Abstandsstrukturen 502 erzeugt und die Funktionselemente der Sensorschicht 406 sind die Diodenblenden 302. Die Abstandsschicht 403 und die Diodenblendenschicht 405 sind somit in einer Schicht zusammengefasst.

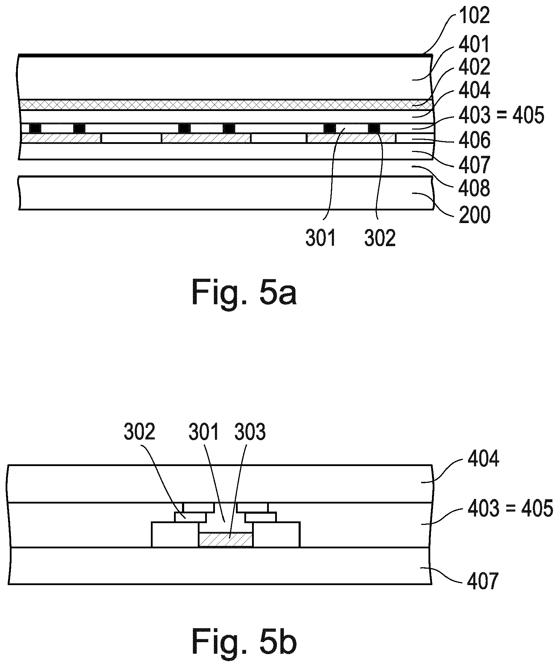

**Fig. 5a** zeigt eine siebte Ausführung der Vorrichtung zur optischen Direktaufnahme von sicherheitsrelevanten Objekten 101. Die Schichtenfolge enthält die Deckschicht 401 mit der Auflagefläche 102, die Adhäsionsschicht 402, die Passivierungsschicht 404, die Abstandsschicht 403 mit den Abstandsstrukturen 502, die Diodenblendenschicht 405 mit den Diodenblenden 302, die Sensorschicht 406 mit den Sensorpixeln 307, die Abstandsschicht 403 mit den Abstandsstrukturen 502 und das Substrat 407. Die Beleuchtungsschicht 200 ist aus Sicht der Auflagefläche 102 unterhalb der Luftschicht 408 angeordnet. Die Abstandsschicht 403 ist durch aus vorhandenen, erhaben ausgeformten Funktionselementen der Sensorschicht 406 gebildeten Abstandsstrukturen 502 erzeugt und die Funktionselemente der Sensorschicht 406 sind die Diodenblenden 302. Die Abstandsschicht 403 und die Diodenblendenschicht 405 sind somit in einer Schicht zusammengefasst.

Fig. 5b zeigt beispielhaft die Struktur einer Diodenblende 302. Die Diodenblende 302 ist erhaben und stufenförmig ausgeformt und schließt ein Gas oder ein Gasgemisch, vorteilhaft Luft, ein. Die Passivierungsschicht 404 schließt die Diodenblende 302 nach oben in Richtung der Deckfläche 102 ab.

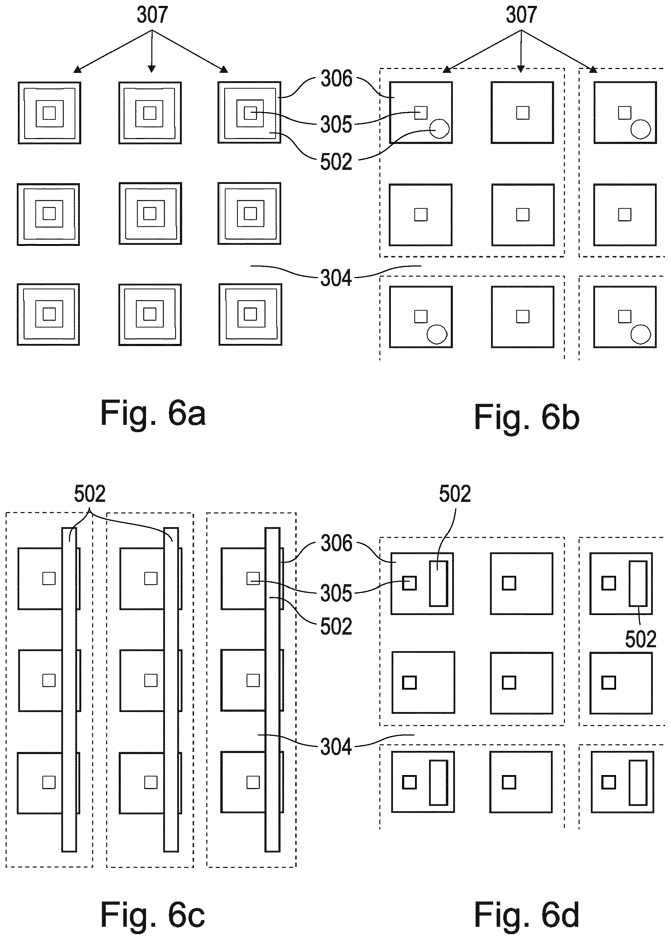

Die **Fig. 6a****-f** stellen unterschiedliche Ausführungsbeispiele der Anordnung von Sensorpixeln 307 und Abstandsstrukturen 502 dar. Dargestellt sind jeweils nur die Abstandsschicht 403 und die Sensorschicht 406. Die Sensorpixel 307 sind bei allen gezeigten Ausführungsbeispielen jeweils rasterförmig angeordnet.

In Fig. 6a ist sind aktive Sensorpixelflächen 305 jeweils mittig auf undurchsichtigen Sensorpixelflächen 306 angeordnet. Um die aktiven Sensorpixelfläche 305 herum sind jeweils rechteckförmig die Abstandsstrukturen 502 auf der undurchsichtigen Sensorpixelfläche 306 aufgebracht. Die Abstandsstrukturen 502 können gleichzeitig als Diodenblenden 302 dienen. Zwischen den undurchsichtigen Sensorpixelflächen 306 befinden sich die Durchlassbereiche 304.

Fig. 6b zeigt ein Ausführungsbeispiel, bei dem mehrere Sensorpixel 307 einer Abstandsstruktur 502 zugeordnet sind. Die Zuordnung der Sensorpixel 307 zu den Abstandsstrukturen 502 ist in Fig. 6b und in den folgenden Figuren durch gestrichelte Linien angedeutet. Die Abstandsschicht 403 ist durch zusätzlich auf die Sensorschicht 406 aufgebrachte, vorteilhaft transparente, Abstandsstrukturen 502 erzeugt. Die Abstandsstrukturen 502 sind in diesem Ausführungsbeispiel zylinderförmig.

Fig. 6c bis Fig. 6f zeigen ebenfalls Ausführungsbeispiele, bei denen mehrere Sensorpixel 307 einer Abstandsstruktur 502 zugeordnet sind.

Fig. 6c zeigt quaderförmige Abstandsstrukturen 502. Die Abstandsstrukturen 502 verlaufen über mehrere Sensorpixel 307.

Bei dem in Fig. 6d abgebildetem Ausführungsbeispiel sind ebenfalls mehrere Sensorpixel 307 einer Abstandsstruktur 502 zugeordnet, ähnlich wie in Fig. 6b. Die Abstandsstrukturen 502 weisen jedoch eine Quaderform auf.

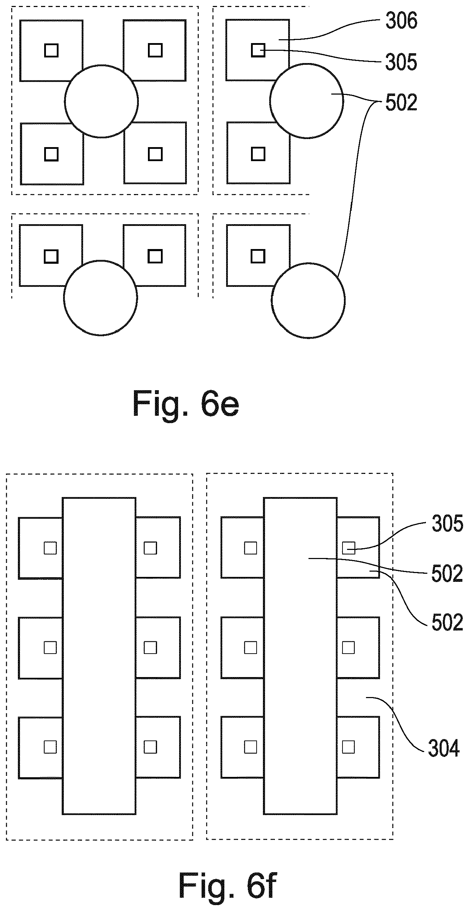

Fig. 6e zeigt ein Ausführungsbeispiel bei dem, wie auch in Fig. 6b, zylinderförmige Abstandsstrukturen 502 vorhanden sind. Die Abstandsstrukturen 502 sind jeweils zwischen zwei Spalten und zwei Reihen von Sensorpixeln 307 angeordnet. Die Abstandsstrukturen 502 sind nicht zwangsläufig zwischen allen Spalten und Reihen der Sensorpixel 307 angeordnet, sondern können auch Spalten und/oder Reihen überspringen.

Eine ähnliche Anordnung zeigt das Ausführungsbeispiel der Fig. 6f, bei dem quaderförmige Abstandsstrukturen 502 jeweils zwischen zwei Spalten von Sensorpixeln 307 angeordnet sind. Die Abstandsstrukturen 502 sind nicht zwischen allen Spalten der Sensorpixel 307 angeordnet, sondern können auch Spalten überspringen.

Es ist möglich, dass eine Abstandsschicht 403 unterschiedlich ausgeführte Abstandsstrukturen 502 aufweist. Ebenso ist es möglich, dass einem Sensorpixel 307 mehrere Abstandsstrukturen 502 zugeordnet sind.

### Bezugszeichenliste

- 101: sicherheitsrelevantes Objekt
- 102: Auflagefläche
- 103: Hautberg (Papillarleiste)
- 104: Hauttal (Papillartal)
- 106: Luftspalt (im Hauttal, unter Dokument)
- 200: Beleuchtungsschicht
- 201: Beleuchtungslicht
- 202: Streulicht
- 203: Beleuchtungselement
- 204: direkte Rückreflexion
- 301: Aussparung
- 302: Diodenblende
- 303: lichtempfindliches Element
- 304: Durchlassbereich
- 305: aktive Sensorpixelfläche
- 306: undurchlässige Sensorpixelfläche
- 307: Sensorpixel
- 308: Eintrittsapertur
- 401: Deckschicht
- 402: Adhäsionsschicht
- 403: Abstandsschicht
- 404: Passivierungsschicht
- 405: Diodenblendenschicht
- 406: Sensorschicht
- 407: Substrat
- 408: Luftschicht
- 409: Filterschicht
- 500: Sensor
- 501: Kleberahmen
- 502: Abstandsstruktur

## Patentansprüche

1. Vorrichtung zur optischen Direktaufnahme von sicherheitsrelevanten Objekten (101), wie mindestens Hautabdrücken, mit einer Schichtenfolge, enthaltend:
- eine Deckschicht (401) mit einer Auflagefläche (102) für ein sicherheitsrelevantes Objekt (101),
- eine Sensorschicht (406), die in einem zweidimensionalen Raster angeordnete Sensorpixel (307) mit jeweils einem lichtempfindlichen Element (303) und einem transparenten Durchlassbereich (304) aufweist, wobei die lichtempfindlichen Elemente (303) in einer Ebene positionierte Eintrittsaperturen aufweisen, die nur für aus Richtung der Auflagefläche (102) kommendes Licht aufnahmefähig sind,
- eine Abstandsschicht (403) mit Abstandstrukturen (502), um von der Auflagefläche (102) einfallendes Licht auf kleine Einfallswinkel auf der Sensorschicht (406) zu begrenzen, und
- ein Substrat (407) als Träger der Schichtenfolge,
**dadurch gekennzeichnet, dass**
- jedem Sensorpixel (307) eine Abstandsstruktur (502) zugeordnet ist, wobei
- die Abstandsschicht (403) durch zusätzlich auf die Sensorschicht (406) aufgebrachte Abstandsstrukturen (502) oder durch Abstandsstrukturen (502) aus vorhandenen, erhaben ausgeformten Funktionselementen der Sensorschicht (406) mit einer definierten Dicke erzeugt ist, und
- die Abstandsschicht (403) mindestens im Bereich der Eintrittsapertur (308) jedes lichtempfindlichen Elements (303) eine von den Abstandsstrukturen (502) freigehaltene Aussparung (301) zum Ausfüllen mit einem Medium, das einen gegenüber der Sensorschicht (406) und einer in Richtung der Auflagefläche (102) angrenzende Schicht einen wesentlich niedrigeren Brechungsindex aufweist, enthält und
- eine Beleuchtungsschicht (200) zum Aussenden von Beleuchtungslicht (201), aus Richtung der Auflagefläche (102) gesehen, unterhalb einer Ebene der Eintrittsaperturen (308) der lichtempfindlichen Elemente (303) der Sensorschicht (406) angeordnet ist.

2. Vorrichtung nach Anspruch 1, **dadurch gekennzeichnet, dass** die Beleuchtungsschicht (200) unterhalb der Sensorschicht (406) angeordnet und zwischen der Beleuchtungsschicht (200) und der Sensorschicht (406) eine Luftschicht (408) vorhanden ist.

3. Vorrichtung nach Anspruch 1, **dadurch gekennzeichnet, dass** die Beleuchtungsschicht (200) Beleuchtungselemente (203) aufweist, die zwischen den lichtempfindlichen Elementen (303) in die Sensorschicht (406) integriert sind.

4. Vorrichtung nach einem der Ansprüche 1 bis 3, **dadurch gekennzeichnet, dass** die Abstandsschicht (403) durch Abstandsstrukturen (502) aus vorhandenen, erhaben ausgeformten Funktionselementen der Sensorschicht (406) mittels Diodenblenden (302) oder elektronischen Strukturen der Sensorschicht (406) erzeugt ist.

5. Vorrichtung nach einem der Ansprüche 1 bis 3, **dadurch gekennzeichnet, dass** die Abstandsschicht (403) durch auf die Sensorschicht (406) aufgebrachte, bevorzugt transparente Abstandsstrukturen (502) erzeugt ist.

6. Vorrichtung nach einem der Ansprüche 1 bis 5, **dadurch gekennzeichnet, dass** die Aussparungen (301) zwischen den Abstandsstrukturen (502) der Abstandsschicht (403) mit einem Gas oder einem Gasgemisch gefüllt oder evakuiert sind.

7. Vorrichtung nach Anspruch 6, **dadurch gekennzeichnet, dass** die Abstandsschicht (403) mit mindestens einem Gas aus der Gruppe Stickstoff, Sauerstoff, Helium, Argon oder einem Gasgemisch unter Beteiligung mindestens eines davon gefüllt ist.

8. Vorrichtung nach einem der Ansprüche 1 bis 7, **dadurch gekennzeichnet, dass** eine Filterschicht (409) zwischen Auflagefläche (102) und Sensorschicht (406) vorhanden ist, um Umgebungslicht, welches neben oder durch den Finger auf die Auflagefläche (102) gelangt, zu blockieren.

9. Vorrichtung nach einem der Ansprüche 1 bis 8, **dadurch gekennzeichnet, dass** die Verbindung der Deckschicht (401) mit einem Sensor (500), umfassend Sensorschicht (406) und Substrat (407), durch Vakuumbonden erzeugt ist.

10. Vorrichtung nach einem der Ansprüche 1 bis 8, **dadurch gekennzeichnet, dass** die Verbindung der Deckschicht (401) mit einem Sensor (500), umfassend Sensorschicht (406) und Substrat (407), durch eine Adhäsionsschicht (402) erzeugt ist.

11. Vorrichtung nach einem der Ansprüche 1 bis 8, **dadurch gekennzeichnet, dass** die Verbindung der Deckschicht (401) mit einem Sensor (500), umfassend Sensorschicht (406) und Substrat (407), durch Airgapbonden mit einem Kleberahmen (501) erzeugt ist.
